# EUROPÄISCHE PATENTSCHRIFT

(11) **EP 2 144 252 B1**
(45) Veröffentlichungstag und Bekanntmachung des Hinweises auf die Patenterteilung: **22.06.2011**
(21) Anmeldenummer: 09158241.1
(22) Anmeldetag: 20.04.2009
(51) Int. Cl.: G21C 3/334, G21C 3/352

(54) **Brennelement für einen Leichtwasserreaktor**
Fuel assembly for a light water reactor
Assemblage de combustible pour un réacteur à eau légère

(30) Priorität: 17.06.2008 DE 102008028774
(43) Veröffentlichungstag der Anmeldung: 13.01.2010
(73) Patentinhaber: Areva NP GmbH, 91052 Erlangen (DE)
(72) Erfinder: Friedrich, Erhard, 90542 Eckental (DE); Schmidt, Norbert, 95490 Gollenbach (DE); Galster, Georg, 91056 Erlangen (DE); Wildenauer, Joachim, 91325 Adelsdorf (DE)
(74) Vertreter: Mörtel & Höfner

(56) Entgegenhaltungen:
- DE-A1- 3 632 153
- DE-A1- 3 821 666
- DE-B3-102006 015 868
- DE-B3-102006 040 965

## Beschreibung

Die Erfindung bezieht sich auf ein Brennelement für einen Leichtwasserreaktor, wie es beispielsweise aus der DE 10 2006 015 868 B3 bekannt ist.

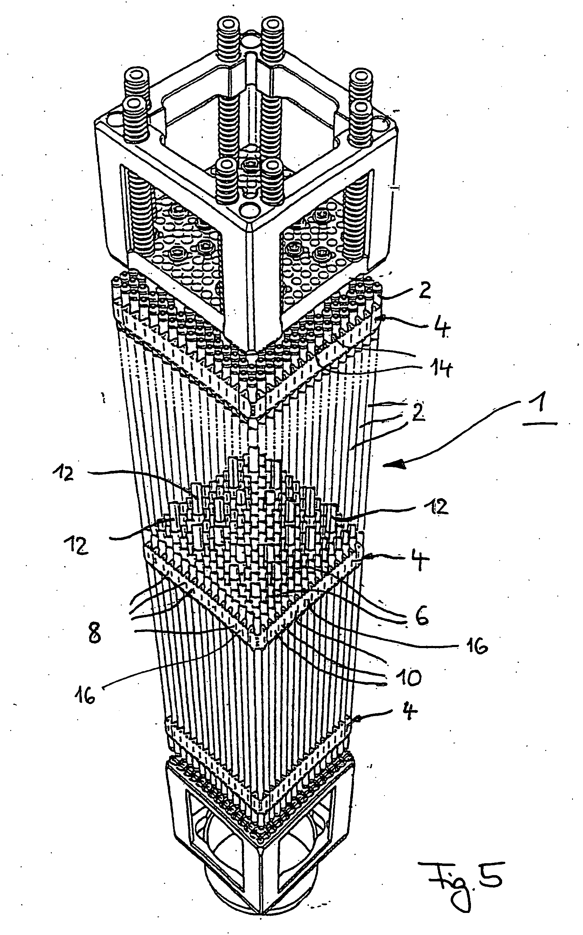

Der prinzipielle Aufbau eines solchen Brennelementes ist exemplarisch für einen Druckwasserkernreaktor in Fig. 5 veranschaulicht. Bei einem solchen Brennelement 1 sind eine Vielzahl von Brennstäben 2 in Stabrichtung (axial) parallel zueinander durch mehrere, voneinander axial beabstandeter Abstandhalter 4 geführt, die jeweils ein zweidimensionales Gitter mit einer Mehrzahl von Zellen 6 bilden, die in Spalten 8 und Reihen 10 angeordnet sind. Durch die Zellen 6 dieses Gitters sind außer den Brennstäben 2 auch an ausgewählten Positionen Stützrohre hindurch geführt, die keinen Brennstoff enthalten und zur Aufnahme und zum Führen von Steuerstäben (sog. Steuerstabführungsrohre 12) vorgesehen sind. Außerdem können noch Stützrohre vorhanden sein, die ebenfalls keinen Brennstoff enthalten und lediglich zur Erhöhung der Stabilität dienen (Instrumentierungsrohre oder Strukturrohre, im beispielhaft dargestellten Brennelement 1 sind weder Instrumentierungsrohre noch Strukturrohre vorgesehen). Diese Stützrohre sind anders als die Brennstäbe in den Zellen 6 mit den Abstandhaltern 4 verschweißt oder in ähnlicher Weise fest verbunden, so dass ihre stabilisierende Wirkung über die gesamte Einsatzdauer des Brennelements 1 gewährleistet ist.

Die Abstandhalter 4 sind aus sich kreuzenden Innenstegen 14 aufgebaut und weisen an ihren seitlichen Rändern Rand- oder Außenstege 16 auf. Sowohl während des Betriebes als auch bei der Handhabung der Brennelemente können in sehr seltenen Fällen die Abstandhalter 4 derart beschädigt werden, dass die Rand- oder Außenstege 16 der Abstandhalter 4 durch Reibverschleiß oder Verhaken bei der Handhabung vollständig oder teilweise durchtrennt werden.

Um den in den Brennstäben vorhandenen noch nicht abgebrannten Brennstoff auch ohne ein komplettes Zerlegen des Brennelementes weiter nutzen zu können, ist es aus der DE 10 2006 015 868 B3 bekannt, in den Randsteg am Ort einer Beschädigung eine Ausnehmung einzubringen und in die dort befindliche Zelle eine Reparaturhülse einzusetzen, die mit der Zelle fluchtet. Die Reparaturhülse weist Klemmzungen in der Art eines Clips auf, die Innenstege der Zelle hintergreifen. Der Clip ist an seinem freien Ende mit einer Rastnase versehen, die je nach Länge des Clips entweder in eine Öffnung eingreift, die sich im hintergriffenen Innensteg befindet, oder, falls sich der Clip über die gesamte axiale Bauhöhe des betreffenden Innensteges erstreckt, dessen Unterkante hintergreift, um auf diese Weise die Reparaturhülse axial und radial in der Zelle zu fixieren. Bei einem in dieser Weise reparierten Brennelement ist sowohl die Stablagerung als auch die Handhabung und Abstützung der Brennelemente untereinander gegenüber anderen im Stand der Technik bekannten Brennelementen verbessert.

Bei der Verwendung kurzer Klemmzungen, die sich nicht über die gesamte Steghöhe erstrecken, sind zur axialen Fixierung der Reparaturhülse Öffnungen in den Innenstegen erforderlich. Diese müssen in vielen Anwendungsfällen nachträglich in einem weiteren Bearbeitungsschritt eingebracht werden. Ein derartiger Bearbeitungsschritt entfällt bei der Verwendung von langen Klemmzungen, die sich über die gesamte Bauhöhe des Steges erstrecken. Der Einbau von Reparaturhülsen mit derartigen Klemmzungen ist jedoch durch an den Stegen in vielen Fällen zur Lagerung des Brennstabes angeordnete Vorsprünge (Noppen oder Federn) oftmals nicht möglich.

Der Erfindung liegt deshalb die Aufgabe zu Grunde, ein mit einer Reparaturhülse versehenes Brennelement für einen Leichtwasserreaktor anzugeben, das hinsichtlich der Stablagerung die gleichen Vorteile aufweist wie das bekannte reparierte Brennelement, dessen Herstellung jedoch vereinfacht ist.

Die genannte Aufgabe wird gemäß der Erfindung gelöst mit einem Brennelement mit den Merkmalen des Patentanspruches 1. Gemäß diesen Merkmalen ist in einer am Rand eines Abstandhalters des Brennelementes befindliche Zelle eine Reparaturhülse angeordnet, die aus zwei aus axial einander entgegengesetzten Richtungen in die Zelle eingesetzten und miteinander durch eine Rastverbindung in Axialrichtung verbundenen Hülsenabschnitten aufgebaut ist, die an ihrem Außenumfang jeweils zumindest eine Anschlagfläche aufweisen, mit denen die aus den Hülsenabschnitten zusammengesetzte Reparaturhülse axial in dieser Zelle fixiert ist.

Durch die Verwendung einer Reparaturhülse, die aus zwei Hülsen zusammengesetzt ist, die an den einander gegenüberliegenden offenen Stirnseiten der Zelle in diese eingeführt werden können, ist es möglich, eine axiale Fixierung der zusammengesetzten Reparaturhülse in der Zelle durch einen am Umfang der Hülsenabschnitte jeweils angebrachten und die Einführtiefe der Hülsenabschnitte in die Zelle jeweils begrenzenden Anschlag zu ermöglichen, ohne dass ein Eingriff in den Innenraum benachbarter Zellen erfolgen muss, so dass dort an den Stegen vorhandene und sich ins Innere erstreckende Einbauten nicht stören und eine gegebenenfalls erforderliche nachträgliche Bearbeitung der Innenstege, beispielsweise das Einbringen von Durchgangsöffnungen für die axiale Fixierung der aus der DE 10 2006 015 868 B3 bekannten Reparaturhülse, entfällt.

Da die Hülsenabschnitte durch eine Rast- oder Schnappverbindung miteinander verbunden werden, ist die Montage vereinfacht, da sie nur aus entgegengesetzten Richtungen in die defekte Zelle eingeführt und gegeneinander geführt werden müssen, bis die Rastverbindung einen Formschluss herbeiführt.

Wenn außerdem einer der Hülsenabschnitte einen Haken aufweist, der einen die Zelle begrenzenden Gittersteg hintergreift, sind die Hülsenabschnitte und damit auch die zusammengesetzte Reparaturhülse auch in einer radialen Richtung in der Zelle fixiert.

Der Haken greift vorzugsweise im Bereich einer Stegkreuzung in eine diagonal benachbarte Innenzelle ein. Im Bereich einer solchen Kreuzungsstelle ist der bei eingeführtem Brennstab verfügbare Innenraum am größten und weist in der Regel auch keine den Eingriff des Hakens behindernde Anbauten auf.

Mit einem solchen Haken wird eine federnde radiale Fixierung der Hülsenabschnitte bzw. der Reparaturhülse in der Zelle erreicht, wenn der zumindest eine Hülsenabschnitt zwei sich in Axialrichtung erstreckende Schlitze aufweist, zwischen denen durch die Wand des Hülsenabschnittes eine Federzunge mit einem freien Ende gebildet ist, an der der Haken angeordnet ist.

Weitere vorteilhafte Ausgestaltungen der Erfindung sind in den weiteren Unteransprüchen angegeben. Zur weiteren Erläuterung der Erfindung wird auf die Ausführungsbeispiele der Zeichnung verwiesen. Es zeigen:
- Fig. 1: einen Abstandhalter eines Brennelementes gemäß der Erfindung mit einer in eine Eckzelle des Abstandhalters eingebauten Reparaturhülse mit einem darin befindlichen Dummystab in einer perspektivischen Ansicht auf die Ecke des Abstandhalters,
- Fig. 2: die in die Eckzelle eingebaute Reparaturhülse ebenfalls in einer perspektivischen Ansicht aus einer dazu annä- hernd senkrechten Richtung bei teilweise freigelegtem Blick auf die Rückseite eines die Eckzelle begrenzenden Innensteges,
- Fig. 3 und 4: jeweils perspektivischen Ansichten der Hülsenab- schnitte, aus denen die Reparaturhülse zusammengesetzt ist,
- Fig. 5: ein Brennelement eines Druckwasserkernreaktors in einer schematischen perspektivischen Darstellung.

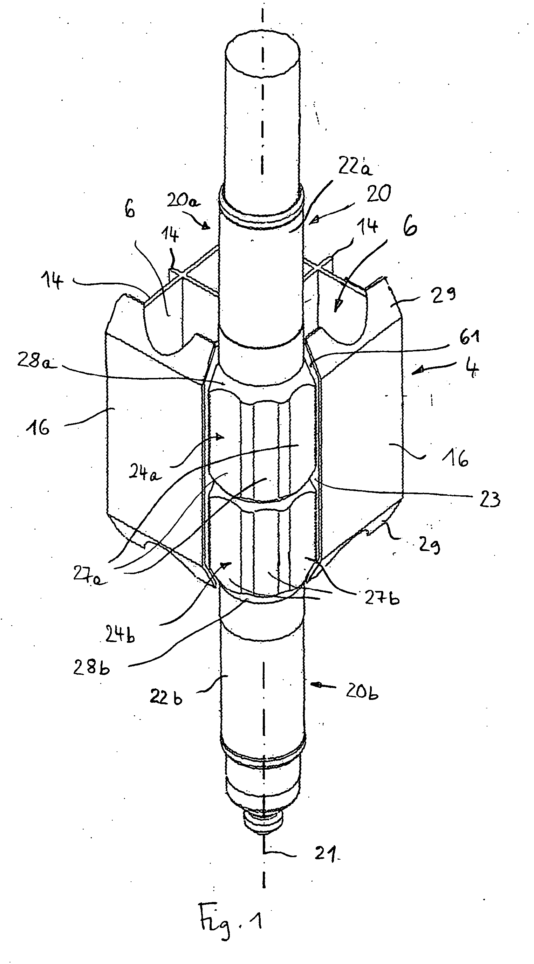

Gemäß Fig. 1 ist in einer am Rand des Abstandhalters 4 befindlichen Zelle 6, im Beispiel eine Eckzelle 61 des Abstandhalters 4, eine Reparaturhülse 20 angeordnet. Die Reparaturhülse 20 ist aus zwei Hülsenabschnitten 20a und b zusammengesetzt, die jeweils aus einem im wesentlichen zylindrischen Grundkörper 21a bzw. b aufgebaut und miteinander in Axialrichtung 22 formschlüssig verbunden sind. Vor dem Einbau der Reparaturhülse 20 sind die am Rand des Abstandhalters 4 befindlichen Randstege 16 an einer defekten Ecke des Abstandhalters 4 jeweils ausgehend von der Ecke nahezu vollständig bis zum nächstliegenden Innensteg abgetragen worden, um eine Ausnehmung 23 zu schaffen, die an die Abmessungen der Hülsenabschnitte 20a,b angepasst ist.

Die Hülsenabschnitte 20a und b weisen jeweils einen in die Ausnehmung 23 ragenden und vom zylindrischen Grundkörper 22a bzw. b abgesetzten Vorsprung 24a bzw. b mit drei planen Außenflächen 27a,b auf, die den Konturverlauf der Randstege 16 des Abstandhalters 4 an der gesamten Außenfläche der Eckzelle 61 nachbilden und flächenbündig mit der an die Ausnehmung 23 angrenzenden Außenfläche des Abstandhalters 4 verlaufen. Zwischen den planen Außenflächen 27a,b und dem zylindrischen Grundkörper 22a,b befindet sich eine konische Schulter 28a,b, deren Schräge an die Schräge der an den oberen und unteren Kanten der Randstege 16 angebrachten Strömungsleitfahnen 29 angepasst ist. Der Vorsprung 24a,b weist somit zumindest in seinem dem gegenüberliegenden Hülsenabschnitt 20b bzw. a abgewandten Bereich eine in Axialrichtung wirkende Gleitschräge auf, die das Einsetzen oder Entnehmen des mit einem solchen Abstandhalter versehenen Brennelementes in einen Reaktorkern erleichtern.

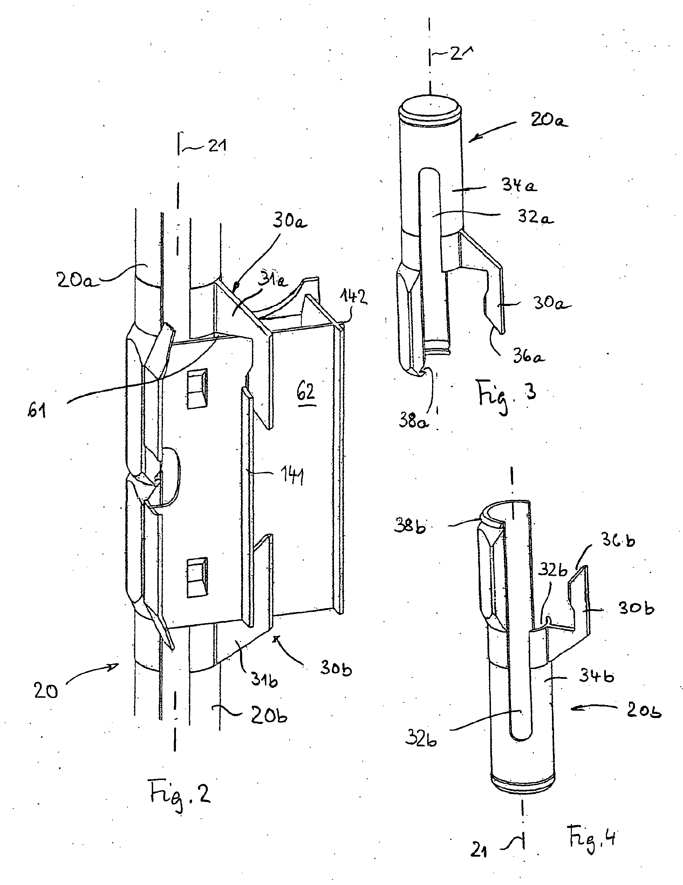

In der perspektivischen Ansicht gemäß Fig. 2 ist zu erkennen, dass an jeden der Hülsenabschnitte 20a,b ein Haken 30a bzw. b angeformt ist, der im Bereich einer Stegkreuzung in die der Eckzelle 61 diagonal benachbarte Innenzelle 62 eingreift und die Hülsenabschnitte 20a,b in einer zur Axialrichtung 21 senkrechten, parallel zur Diagonale der Eckzelle 61 verlaufenden Richtung in der Eckzelle 61 fixiert. Zur besseren Sichtbarkeit der Kontur des Hakens 30a ist der die Eckzelle 61 begrenzende und die Haken 30a,b bei einer solchen Ansicht verdeckende Innensteg 141 nicht bis zur Oberkante des senkrecht dazu verlaufenden Innensteges 142 eingezeichnet.

Die Haken 30a,b haben einen im Wesentlichen L-förmigen Verlauf und liegen mit einer Kante des sich jeweils radial ausgehend von dem Hülsenabschnitt 20a bzw. b erstreckenden Schenkels 31a bzw. b auf der oberen bzw. unteren Kante der sich im Kreuzungspunkt schneidenden Innenstege 141 und 142 auf. Diese Schenkel 31a,b bilden somit eine Anschlagfläche, die die aus den Hülsenabschnitte 20a,b zusammengesetzte Reparaturhülse axial in der Eckzelle 61 fixieren.

Die Fixierung der Reparaturhülse 20 in Umfangsrichtung wird einerseits durch die an den Kanten der Ausnehmung 23 anliegenden Vorsprünge 24a,b und andererseits durch die in die Innenzelle 62 eingreifenden Haken 30a,b bewirkt.

Fig. 3 und 4 ist zu entnehmen, dass die Hülsenabschnitte 20a, b jeweils zwei sich in Axialrichtung 21 erstreckende Schlitze 32a bzw. b aufweisen, von denen in den Figuren jeweils nur einer vollständig sichtbar ist. Die Schlitze 32a,b erstrecken sich jeweils bis zur dem anderen Hülsenabschnitt zugewandten Stirnseite, so dass zwischen diesen Schlitzen 32a,b jeweils eine Federzunge 34a bzw. b gebildet ist, an deren freien Ende jeweils der Haken 30a bzw. b angeordnet ist. Auf diese Weise sind die Haken 30a,b radial federnd an den Hülsenabschnitten 20a bzw. b gelagert und dementsprechend die in die Eckzelle 61 eingeführten Hülsenabschnitte 20a, b radial federnd in der Eckzelle 61 gelagert. Um das Einführen der Haken 30a,b in die diagonal benachbarte Innenzelle 62 zu erleichtern, sind diese jeweils mit einer Einführschräge 36a,b versehen.

Der in Fig. 3 dargestellte Hülsenabschnitt 20a weist im Bereich seiner der gegenüberliegenden Hülse 20b zugewandten Stirnfläche eine an der Innenfläche ringförmig umlaufende Aussparung 38a auf, in die beim Zusammenschieben der koaxial ausgerichteten Hülsenabschnitte 20a,b ein am Hülsenabschnitt 20b am Außenumfang angeordneter ebenfalls ringförmig umlaufender hakenförmigen Vorsprung 38b eingreift und mit dieser eine Rastverbindung eingeht, die die Hülsenabschnitte 20a,b in Axialrichtung formschlüssig miteinander verbindet.

Anstelle einer solchen formschlüssigen Rastverbindung sind auch andere formschlüssige Verbindungen oder eine kraftschlüssige Verbindung zwischen den Hülsenabschnitten 20a,b möglich. Wesentlich ist nur, dass die beiden Hülsenabschnitte 20a,b nach erfolgter Montage in Axialrichtung 21 relativ zu einander fixiert sind.

Im dargestellten Ausführungsbeispiel ist der Abstandhalter im Bereich einer Eckzelle mit einer solchen Reparaturhülse versehen. Grundsätzlich können aber auch andere, sich am Rand des Abstandhalters zwischen den Eckzellen befindliche Zellen in sinngemäß ähnlicher Weise repariert werden, wobei der in den Hülsenabschnitten 20a,b jeweils befindliche Vorsprung 24a bzw. b nur eine einzige plane Fläche aufweisen muss.

Darüber hinaus sind auch Ausführungsformen möglich, bei denen zur radialen Fixierung der Reparaturhülse 20 nur einer der Hülsenabschnitte 20a oder b einen Haken 30a bzw. b aufweist. Am anderen Hülsenabschnitt 20b oder a muss dann lediglich ein Absatz oder eine Schulter vorgesehen sein, der an einer Kante der die beschädigte Zelle 6 umgebenden Innenstege 14 anliegt und auf diese Weise als Anschlagfläche dient und die axiale Fixierung der Reparaturhülse 20 bewirkt.

Ein solcher Haken 30a, b kann auch entfallen, wenn die Ausnehmung 23 (Fig. 1) so klein ist, dass sich die Reparaturhülse 20 an dem oder die im Bereich der beschädigten Zelle 6 noch befindlichen Abschnitte des oder der mit der Ausnehmung 23 versehenen Randstege 16 abstützen kann und auf diese Weise radial fixiert ist. In diesem Fall müssen beide Hülsenabschnitte 20a,b lediglich einen Absatz oder eine Schulter aufweisen, mit der sie sich an Ober- bzw. Unterkanten der die beschädigte Zelle 6 umgebenden Innenstege 14 abstützen.

## Patentansprüche

1. Brennelement für einen Leichtwasserreaktor, mit einer Vielzahl von Brennstäben, die in einer Mehrzahl von axial beabstandeten Abstandhaltern (4) geführt sind, die jeweils ein aus Gitterstegen (14,16) aufgebautes Gitter mit einer Vielzahl von Zellen (6) bilden, die in Reihen (10) und Spalten (8) angeordnet sind, wobei in einer Zelle (6) eine Reparaturhülse (20) angeordnet ist, die aus zwei aus axial einander entgegengesetzten Richtungen in die Zelle (6) eingesetzten und miteinander in Axialrichtung durch eine Rastverbindung verbundenen Hülsenabschnitten (20a,b) aufgebaut ist, die an ihrem Außenumfang jeweils zumindest eine Anschlagfläche aufweisen, mit denen die aus den Hülsenabschnitten (20a,b) zusammengesetzte Reparaturhülse (20) axial in dieser Zelle (6) fixiert ist.

2. Brennelement nach Anspruch 1, bei dem zumindest einer der Hülsenabschnitte (20a,b) einen Haken (30a,b) aufweist, der einen die Zelle (6) begrenzenden Innensteg (14) hintergreift.

3. Brennelement nach Anspruch 2, bei dem der Haken (30a,b) im Bereich einer Stegkreuzung in eine diagonal benachbarte Innenzelle (62) eingreift.

4. Brennelement nach Anspruch 2 oder 3, bei dem der zumindest eine Hülsenabschnitt (20a,b) zwei sich in Axialrichtung erstreckende Schlitze (32a,b) aufweist, zwischen denen durch die Wand des Hülsenabschnittes (20a,b) eine Federzunge (34a,b) mit einem freien Ende gebildet ist, an der der Haken (30a,b) angeordnet ist.

5. Brennelement nach Anspruch 4, bei dem sich die Schlitze (32a,b) bis zur dem anderen Hülsenabschnitt (20a,b) zugewandten Stirnseite erstrecken.

6. Brennelement nach einem der vorhergehenden Ansprüche, bei dem einer der Hülsenabschnitte (20b) an seiner dem anderen Hülsenabschnitt (20a) zugewandten Stirnseite einen am Außenumfang angeordneten Vorsprung (38b) aufweist, der in eine am Innenumfang des anderen Hülsenabschnittes (20a) befindliche Aussparung (38a) einrastet.

7. Brennelement nach einem der vorhergehenden Ansprüche, bei dem der Randsteg (16) der Zelle (6) eine Ausnehmung (23) aufweist, und bei dem die Hülsenabschnitte (20a,b) einen in die Ausnehmung (23) ragenden Vorsprung (24a,b) aufweisen, der flächenbündig mit der an die Ausnehmung (23) angrenzenden Außenfläche des Abstandhalters (4) verläuft.

8. Brennelement nach Anspruch 7, bei dem der Vorsprung (24a,b) zumindest in seinem dem gegenüberliegenden Hülsenabschnitt (20a,b) abgewandten Bereich eine in Axialrichtung (21) wirkende Gleitschräge aufweist.

## Claims

1. Fuel assembly for a light water reactor, comprising a multiplicity of fuel rods which are guided in a plurality of axially spaced spacers (4) that form in each case a grid which is composed of grid webs (14, 16) and has a multiplicity of cells (6) arranged in rows (10) and columns (8), wherein a repair sleeve (20) is arranged in a cell (6), which repair sleeve (20) is constructed from two sleeve sections (20a, b), which are inserted into the cell (6) from axially opposite directions, are interconnected in the axial direction via a latching connection and have, on their outer circumference, in each case at least one abutment surface with which the repair sleeve (20), which is assembled from the sleeve sections (20a, b), is axially fixed in this cell (6).

2. Fuel assembly according to Claim 1, in which at least one of the sleeve sections (20a, b) has a hook (30a, b), which engages behind an internal web (14) bounding the cell (6).

3. Fuel assembly according to Claim 2, in which the hook (30a, b) engages in a diagonally adjacent internal cell (62) in the region of a web intersection.

4. Fuel assembly according to Claim 2 or 3, in which the at least one sleeve section (20a, b) has two slots (32a, b) which extend in the axial direction, between which slots (32a, b) an elastic tongue (34a, b) having a free end, on which the hook (30a, b) is arranged, is formed by the wall of the sleeve section (20a, b).

5. Fuel assembly according to Claim 4, in which the slots (32a, b) extend up to the front end facing the other sleeve section (20a, b).

6. Fuel assembly according to one of the preceding claims, in which one of the sleeve sections (20b) has at its front end facing the other sleeve section (20a) a protrusion (38b) which is arranged on the outer circumference and latches into a recess (38a) located on the inner circumference of the other sleeve section (20a).

7. Fuel assembly according to one of the preceding claims, in which the edge web (16) of the cell (6) has a cutout (23), and in which the sleeve sections (20a, b) have a protrusion (24a, b) which protrudes into the cutout (23) and the surface of which extends flush with the external surface of the spacer (4) that adjoins the cutout (23).

8. Fuel assembly according to Claim 7, in which the protrusion (24a, b) has, at least in its region which is remote from the opposite sleeve section (20a, b), a bevelled sliding portion which acts in the axial direction (21).

## Revendications

1. Assemblage de combustible pour un réacteur à eau légère comprenant une pluralité de barres de combustible, qui sont guidées dans une pluralité d'espaceurs (4) espacés axialement, les espaceurs formant une grille construite à base de traverses de grille (14, 16) avec un grand nombre de cellules (6) disposées en rangées (10) et colonnes (8), un manchon de réparation (20) étant disposé dans une cellule (6), le manchon étant conçu à base de deux parties de manchon (20a, b) insérées à partir de deux directions opposées axialement l'une à l'autre dans la cellule (6) et reliées l'une à l'autre dans le sens axial par une liaison à encliquetage, lesdites parties présentant chacune sur leur pourtour extérieur au moins une surface de butée, surfaces avec lesquelles le manchon de réparation (20) constitué des parties de manchon (20a, b) est fixé axialement dans cette cellule (6).

2. Assemblage de combustible selon la revendication 1, sur lequel au moins l'une des parties de manchon (20a, b) présente un crochet (30a, b), qui saisit par l'arrière une traverse intérieure (14) délimitant la cellule (6).

3. Assemblage de combustible selon la revendication 2, sur lequel le crochet (30a, b) s'engage dans la zone d'un croisement de traverse dans une cellule intérieure (62) voisine en diagonale.

4. Assemblage de combustible selon la revendication 2 ou 3, sur lequel la au moins une partie de manchon (20a, b) présente deux fentes (32a, b) s'étendant dans le sens axial, fentes entre lesquelles est formée à travers la paroi de la partie de manchon (20a, b) une lame de ressort (34a, b) avec une extrémité libre, lame sur laquelle le crochet (30a, b) est disposé.

5. Assemblage de combustible selon la revendication 4, sur lequel les fentes (32a, b) s'étendent jusqu'à la face avant tournée vers l'autre partie de manchon (20a, b).

6. Assemblage de combustible selon l'une quelconque des revendications précédentes, sur lequel l'une des parties de manchon (20b) présente sur son côté avant, tourné vers l'autre partie de manchon (20a), une saillie (38b) disposée sur le pourtour extérieur qui s'engage dans un évidement (38a) se trouvant sur le pourtour intérieur de l'autre partie de manchon (20a).

7. Assemblage de combustible selon l'une quelconque des revendications précédentes, sur lequel la traverse de bordure (16) de la cellule (6) présente un évidement (23), et sur lequel les parties de manchon (20a, b) présentent une saillie (24a, b) dépassant dans l'évidement (23), ladite saillie étant agencée en affleurement avec la surface extérieure, contiguë à l'évidement (23) de l'espaceur (4).

8. Assemblage de combustible selon la revendication 7, sur lequel la saillie (24a, b) présente un chanfrein de glissement agissant dans le sens axial (21) au moins dans la zone opposée à la partie de manchon (20a, b) lui faisant face.
